# EUROPÄISCHE PATENTANMELDUNG

(11) **EP 2 727 811 A2**
(43) Veröffentlichungstag der Anmeldung: **07.05.2014**
(21) Anmeldenummer: 13190801.4
(22) Anmeldetag: 30.10.2013
(51) Int. Cl.: B63B 5/08, B63B 17/00, B63B 29/22

(54) **Kunststofffliesen für die Anwendung auf Schiffen**

(30) Priorität: 30.10.2012 DE 102012219826
(71) Anmelder: G. Theodor Freese GmbH & Co. KG, 28237 Bremen (DE); Hermann Kassens Bauunternehmung GmbH, 26871 Papenburg (DE)
(72) Erfinder: Kassens, Hermann, 26871 Papenburg (DE); Buchholz, Jörg, 28844 Weyhe (DE)
(74) Vertreter: Eisenführ Speiser

(57) **Zusammenfassung**

Die Erfindung betrifft ein Fliesenelement für den Einsatz in technischen Nassbereichen auf Schiffen mit einer rutschfesten Oberfläche mit einer ersten makroskopischen Welligkeit und einer mikroskopischen Rauigkeit, einer eckigen Form zur gefugten Verlegung mehrerer Fliesen in aneinanderstoßender Anordnung, und einer unteren Verklebungsfläche, Ein weiterer Aspekt der Erfindung ist ein Verfahren zur Herstellung eines rutschfesten Schiffsbodenbelags für technische Nassbereiche. Erfindungsgemäß besteht das Fliesenelement aus Kunststoff und ist aus zumindest zwei unterschiedlichen Ausgangsmaterialien in einer chemischen Vernetzungsreaktion hergestellt.

## Beschreibung

Die Erfindung betrifft ein Fliesenelement für den Einsatz in technischen Nassbereichen auf Schiffen mit einer rutschfesten Oberfläche mit einer ersten makroskopischen Welligkeit und einer mikroskopischen Rauigkeit, einer eckigen Form zur gefugten Verlegung mehrerer Fliesen in aneinanderstoßender Anordnung, und einer unteren Verklebungsfläche, Ein weiterer Aspekt der Erfindung ist ein Verfahren zur Herstellung eines rutschfesten Schiffsbodenbelags für technische Nassbereiche.

Bodenbeläge auf Schiffen unterliegen - im Gegensatz zu Bodenbelägen, die in Gebäuden verlegt werden - erhöhten Anforderungen hinsichtlich ihrer Gebrauchseigenschaften. Dies liegt darin begründet, dass auf Schiffen zwar ebenso wie in Gebäuden - im Gegensatz aber zu anderen Fahrzeugen - es erforderlich ist, dass sich Personen, insbesondere das Personal des Schiffes, dort zur Ausübung zahlreicher Dienstleistungen und Tätigkeiten aufhalten und bewegen müssen, dies aber aufgrund der Schiffsbewegungen einen besonderen Halt der Personen auf den Boden erfordert. Zusätzlich werden durch die Schiffsbewegungen und Antriebseinflüsse des Schiffes auf Bodenbeläge eines Schiffes mechanische Einwirkungen ausgeübt, die der Schiffsboden ohne Beeinträchtigung seiner Eigenschaften über einen langen Benutzungszeitraum aushalten muss.

Eine besondere Herausforderung stellen hierbei technische Nassbereiche auf einem Schiff dar. Unter einem technischen Nassbereich ist ein Raum zu verstehen, in dem eine Dienstleistung oder Tätigkeit ausgeübt wird, die dazu führen kann, dass der Boden während der Ausübung der Tätigkeit nass wird und bleibt oder die es erfordert, dass der Boden mit einem Nassreinigungsverfahren gereinigt wird. Durch die in solchen Nassbereichen vorliegende Flüssigkeit auf dem Boden, insbesondere Wasser, gegebenenfalls aber auch andere Flüssigkeiten wie Öle, Treibstoffe, trinkbare Flüssigkeiten oder zur Speisezubereitung verwendete oder dabei anfallende Flüssigkeiten und dergleichen, wird die Haftung zwischen den Sohlen der Personen, die auf dem Bodenbelag laufen, und dem Boden signifikant herabgesetzt

Es ist bekannt, in solchen technischen Nassbereichen auf Schiffen Fliesen zu verlegen, die aus keramischem Material bestehen. Solche Fliesen weisen den Vorteil auf, dass sie herstellungsbedingt eine natürliche Rauigkeit aufweisen. Weiterhin hat es sich als vorteilhaft erwiesen, dass Fliesen vor allem dann wirtschaftlich und effizient hergestellt werden können, wenn sie eine typische Größe von etwa 15 cm haben und quadratisch sind oder zumindest ähnliche Abmessungen aufweisen. Bei einer solchen Größe besteht bei keramischen Fliesen eine geringe Bruchgefahr und Ausschussquote in der Fertigung, zugleich ist die Verlegung der Fliese mit dem üblichen Aufwand möglich. Bei Verwendung von Fliesen dieser Größenordnung ergeben sich zwischen den Fliesen aufgrund eines erforderlichen Abstands zwischen benachbarten Fliesen jeweiligen Fugen, die mit einem Zement-Mörtelgemisch verfüllt werden. Die Fugen stellen dadurch fertigungsbedingte Ablaufkanäle dar, in denen Flüssigkeiten von den Oberflächen der Fliesen abfließen können und hierdurch die Gefahr der Bildung eines Schmierfilms reduziert werden kann.

Keramische, verflieste Fußbodenbeläge haben sich im praktischen Gebrauch bewährt, da sie die Anforderungen für Fußbodenbeläge in technischen Nassbereichen auf Schiffen erfüllen, die teilweise auch durch Berufsorganisationen, berufsgenossenschaftliche Vorschriften oder dergleichen reglementiert sind. Allerdings gibt es Verbesserungsbedarf bei dieser Art von Fußbodenbelag, da insbesondere die Verlegung aufwendig ist und sich im längeren Gebrauch Nachteile gezeigt haben. Diese Nachteile bestehen darin, dass es bei keramischen Fliesen aufwändig ist, die Fliese im Randbereich des Fußbodenbelags an entsprechende Anschlusselemente dauerhaft flüssigkeitsdicht anzubinden, insbesondere bei langem Nutzungszeitraum kann diese Anbindung undicht werden, was zu Schäden im Bereich des Fundaments führen kann.

Der Erfindung liegt die Aufgabe zugrunde, einen Fußbodenbelag für einen technischen Nassbereich eines Schiffes bereitzustellen, der diese Nachteile überwindet.

Diese Aufgabe wird erfindungsgemäß mit einem Fliesenelement der eingangs beschriebenen Art gelöst, bei dem das Fliesenelement aus Kunststoff besteht und aus zumindest zwei unterschiedlichen Ausgangsmaterialien in einer chemischen Vernetzungsreaktion hergestellt ist.

Erfindungsgemäß wird ein Fliesenelement aus einem Polymermaterial bereitgestellt, welches eine erste makroskopische Welligkeit und eine mikroskopische Rauigkeit an Ihrer Oberfläche aufweist. Mit dieser Ausgestaltung wird einerseits das Abfließen größerer Flüssigkeitsmengen in die Tiefenbereiche der ersten makroskopischen Welligkeit ermöglicht, wodurch die Rutschfestigkeit generell erhöht wird, indem die Fugen eines Bodenbelags aus keramischen Fliesen hierdurch in ihrer Funktion ersetzt werden. Dies ermöglicht es, dass Fliesenelement einstückig in einer wesentlich größeren Abmessung bereitzustellen als ein keramisches Fliesenelement, so kann beispielsweise die erfindungsgemäße Fliese aus Kunststoff in einer Größe von 1,0 x 1,0 m hergestellt und verlegt werden. Das Fliesenelement weist weiterhin eine mikroskopische Rauigkeit in der rutschfesten Oberfläche auf, die der ersten makroskopischen Welligkeit überlagert ist. Diese mikroskopische Rauigkeit sorgt für mechanische Verklammerungs- und Verzahnungseffekte mit den Sohlen von Personen, die die Oberfläche betreten und ermöglicht die Verdrängung kleinerer Flüssigkeitsmengen aus den Kontaktbereichen zwischen einer Sohle und der Oberfläche. Grundsätzlich ist zu verstehen, dass makroskopische Welligkeit und mikroskopische Rauigkeit sich einander überlagern und darin unterscheiden, dass die makroskopische Welligkeit sowohl hinsichtlich des Abstands der Erhebungen bzw. Vertiefungen, welche die Welligkeit darstellen, als auch hinsichtlich deren Höhe bzw. Tiefe um zumindest eine Größenordnung, das heißt um zumindest den Faktor 5 bis 15, vorzugsweise 10, größer sind als die entsprechenden geometrischen Kennwerte der mikroskopischen Rauigkeit.

Der Kunststoff, aus dem das Fliesenelement an der Oberfläche besteht, wird aus zumindest zwei unterschiedlichen Ausgangsmaterialien hergestellt. Dies erfolgt in einer chemischen Vernetzungsreaktion, die eine Polymerisation, Polyaddition oder Polykondensation sein kann. Insbesondere kommen als Kunststoff für das Fliesenelement Harze wie Epoxidharze in Frage, ebenso sind andere Polymere denkbar, wie beispielsweise wie Polyurethane, Polyamide oder dergleichen.

Der Kunststoff kann mit Füllstoffen versehen sein, wobei es insbesondere bevorzugt ist, quarzitische Füllstoffe im Kunststoff verteilt anzuordnen. Diese Füllstoffe können vorzugsweise mehr als 10 Gew.-% im Kunststoff aufweisen. Durch die quarzitischen Füllstoffe wird eine verschleißfeste Oberfläche mit Eigenschaften eines feines Sandpapiers erhalten, wobei unter Benutzung des Fliesenelements diese Struktur durch elastische Rückverformung der Kunststoffanteile, deren schnellerer Verschleiß als die quazitischen Anteile und das entsprechende Herausragen der Füllstoffe auch über eine sehr lange Betriebsdauer aufrecht erhalten wird.

Weiterhin ist es bevorzugt, wenn die rutschfeste Oberfläche des erfindungsgemäßen Fliesenelements eine Kugeldruckhärte von zumindest 150, vorzugsweise mehr als 250 N/mm² aufweist, gemessen als 10-Sekunden-Wert nach DIN 53456. Durch eine solche Härte kann die Wirksamkeit der Rutschsicherheit durch die mikroskopische Rauhigkeit und die makroskopischen Welligkeiten gegenüber üblichen Sohlenmaterialien von Schuhen erzielt werden und zugleich ein diese Wirksamkeit herabsetzender Verschleiß an der Oberfläche des Fliesenelementes vermieden werden.

Besonders bevorzugt wird die erste makroskopische Welligkeit durch einen oder mehrere Drainagekanäle gebildet, welche einen gegenüber der rutschfesten Oberfläche des Fliesenelements vertieften Kanalgrund aufweisen. Durch eine solcherart gestaltete erste makroskopische Welligkeit können Flüssigkeiten, die sich auf dem Fliesenelement befinden, in den Drainagekanälen aufgenom,men und durch diese gegebenenfalls abgeführt werden. Die Oberfläche des Fliesenelements wird hierdurch nicht infolge einer Flüssigkeitsschmierung in ihrem Haftkoeffizienten beeinträchtigt und bietet der Schuhsohle eines Benutzers einen guten Halt gegen Wegrutschen.

Dabei ist es weiter bevorzugt, dass das Fliesenelement mehrere durch Drainagekanäle voneinander getrennte Oberflächenabschnitte umfasst und vorzugsweise diese Oberflächenabschnitte und Drainagekanäle nach Art von verfugten Fliesen zueinander angeordnet sind, wobei die Drainagekanäle die Fugen und die Oberflächenabschnitte die Fliesen nachbilden. Dieser Aufbau ermöglicht es einerseits, die Funktion der Drainagekanäle mit einem optisch gewohnten Bild eines aus Einzelfliesen verlegten und verfugten Bodenbildes zu verbinden. Weiterhin kann durch diese Ausgestaltung eine Flächenergänzung oder Ausbesserung bestehender Fliesenflächen eines Bodens mit dem erfindungsgemäßen Fliesenelement erfolgen. Das durch die Drainagekanäle nachgebildete Fugenbild kann insbesondere nach Art von Stoßfugen mit einem konkav gewölbten Kanalgrund ausgebildet sein, um eine gute Drainage durch die Kanäle zu erreichen.

Das erfindungsgemäße Flieseneelement kann weiter fortgebildet werden durch eine zweite makroskopische Welligkeit, welche durch eine Vielzahl von Erhebungen auf der rutschfesten Oberfläche gebildet wird. Eine solche zweite Welligkeit befindet sich auf der Oberfläche des Fliesenelements und damit im Kontaktbereich zu einer Schuhsohle eines Benutzers der Bodenfläche. Durch eine solche zweite Welligkeit, die in Gestalt von verrundeten Erhöhungen, geometrisch regelmäßigen oder unregelmäßigen Strukturen, pyramidalen Strukturen mit einer ausgeprägten Spitze wie Tetraedern, Pentaedern oder dergleichen, Stiften, Noppen, Spitzen und anderen zur Verklammerung mit der Schuhsohle dienenden Geometrien ausgeführt sein kann, wird ein mechanischer Formschluß durch Indention in die Sohle des Benutzers erreicht, welcher das Fliesenelement betritt und mit seinem Körpergewicht belastet. Hierdurch kann einem seitlichen Wegrutschen auf dem Fliesenelement zusätzlich vorgebeugt werden.

Weiterhin ist es bevorzugt, dass die erste makroskopische Welligkeit durch eine unterschiedliche Stärke des Fliesenelements mit einem Unterschied zwischen der kleinsten Stärke und der größten Stärke von > 0,2 Millimeter realisiert ist oder durch Drainagekanäle mit einer Tiefe von 0,2 bis 1,5mm und einer Breite von 2 bis 10mm, vorzugsweise 3 bis 5mm realisiert ist. Für die Verlegung des Fliesenelementes ist es vorteilhaft, wenn die untere Verklebungsfläche insgesamt eben ist, wobei hierunter eine plane Unterfläche zu verstehen, die gegebenenfalls Nuten oder eine Rauigkeit aufweisen kann, um eine bessere Verklebung mit mechanischer Verklammerung zu gewährleisten. Durch die Variation der Stärke des Fliesenelements im Querschnitt des Fliesenelements wird dann eine makroskopische Welligkeit bereitgestellt, die sicherstellen kann, dass in Benutzung stets hervorstehende Flächenanteile vorhanden sind, auf denen keine Flüssigkeitsmengen lagern können, die stattdessen in tiefer liegende Bereiche mit geringerer Wandstärke der Fliese abfließen können.

Noch weiter ist es bevorzugt, dass die zweite makroskopische Welligkeit durch eine Oberfläche des Fliesenelements mit
- Rp zwischen 0,2 und 1,5 Millimeter vorzugsweise
- Rp zwischen 0, 4und 0,8 Millimeter und insbesondere
- Rp zwischen 0,65 und 0,75Millimeter
über eine Messbezugsstrecke von 5cm realisiert ist Diese Fortbildungsform weist eine erste bzw. zweite makroskopische Welligkeit auf, die einerseits eine sichere Dränage von Flüssigkeit bewirkt, andererseits einen ausreichende mechanischen Formschluss erreicht, und dabei in ihrer Abmessung noch so gering gehalten ist, dass ein Stolpern oder ungewolltes Verhaken der Füße von Benutzern auf der Oberfläche vermieden werden kann.

Gemäß einer weiteren bevorzugten Ausführungsform ist vorgesehen, dass die zweite makroskopische Welligkeit durch eine Rauigkeit der Oberfläche des Fliesenelements mit einer Anzahl von 2- 20 Erhebungen pro 10cm² gebildet wird, insbesondere mit einer Anzahl von 3-10 lokalen Rauhigkeitsspitzen über eine Messbezugsstrecke von 10cm gebildet wird.. Mit dieser Fortbildung wird eine ausreichende strukturelle Größe der zweiten makroskopischen Welligkeit bereitgestellt, um die erhabenen Oberflächen der Fliese so anzuordnen, dass zumindest immer eine der erhabenen Oberflächenabschnitte von der Schuhsohle eines Benutzers erfasst wird und hierdurch eine sichere Haftung hergestellt wird.

Weiterhin ist es bevorzugt vorgesehen, dass die mikroskopische Rauigkeit durch eine Oberfläche des Fliesenelements mit
- Rp zwischen 0,02 und 0,40Millimeter, vorzugsweise
- Rp zwischen 0,04 und 0,15 Millimeter insbesondere
- Rp zwischen 0,05 und 0,055Millimeter
über eine Messbezugsstrecke von 1cm realisiert ist. Mit dieser Fortbildungsform wird eine wirksame mikroskopische Rauigkeit bereitgestellt, die der makroskopischen Welligkeit überlagert sein kann und die im direkten Kontakt zwischen einer Fußsohle eines Benutzers des Fliesenelements und der Oberfläche des Fliesenelements selbst eine schnelle und wirksame Verdrängung von Feuchtigkeitsmengen in die Täler der mikroskopischen Rauigkeit bewirken kann. Es ist zu verstehen, dass die mikroskopische Rauigkeit über die gesamte Oberfläche des Fliesenelements vorhanden sein kann, ebenso aber auch nur Abschnitte dieser Oberfläche mit der mikroskopischen Rauigkeit versehen sein können, beispielsweise nur die durch die makroskopische Welligkeit bereitgestellten, erhabenen Abschnitte der Oberfläche des Fliesenelementes.

Weiterhin ist es bevorzugt, dass die mikroskopische Rauigkeit durch eine Rauigkeit der Oberfläche des Fliesenelements mit einer Anzahl von 3-10 lokalen Rauhigkeitsspitzen über eine Messbezugsstrecke von 1cm gebildet wird. Mit dieser "Wellenlänge" der mikroskopischen Rauigkeiten wird wiederum sichergestellt, dass die Verdrängungswege von Wasser bei Kontakt mit der Fußsohle eines Benutzers nicht zu lang sind, sondern ausreichend kurz sind, um eine wirksame Verdrängung von Flüssigkeit aus den Kontaktbereichen zwischen Sohle und Oberfläche der Fliese sicherzustellen.

Ein weiterer Aspekt der Erfindung ist ein Verfahren zur Herstellung eines rutschfesten Schiffsbodenbelags für technische Nassbereiche, mit den Schritten:
a) Bereitstellen einer Gießform mit einem Hohlraum oder einer Vertiefung, der/die eine Negativform für eine Oberfläche mit einer ersten makroskopischen Welligkeit in Gestalt eines oder mehrerer Drainagekanäle, eine zweite makroskopische Welligkeit in Gestalt einer Mehrzahl von Erhebungen über die Oberfläche und einer mikroskopischen Rauigkeit aufweist, welche vorzugsweise nach einem der Ansprüche 3-11 ausgebildet ist
b) Mischen einer ersten Komponente mit einer hiervon verschiedenen zweiten Komponente zu einer flüssigen Zweikomponentenmischung,
c) Einfüllen der Zweikomponentenmischung in die Gießform,
d) Entnehmen eines Fliesenelementes aus der Gießform nach Reaktion und Aushärtung der Zweikomponentenmischung.

Mit diesem Verfahren wird es ermöglicht, dass Fliesenelemente für technische Nassbereiche auf Schiffen effizient vorgefertigt werden und mit einem geringen Gewicht im Vergleich zu den bekannten keramischen Fliesen für solche Anwendungen erzeugt und transportiert werden können. Zudem ist mit dem erfindungsgemäßen Verfahren es möglich, Fliesenelemente mit größerer Abmessung als bekannte keramische Fliesen herzustellen, wodurch die Verlegung wesentlich schneller und mit wesentlich weniger Fehlerquellen erfolgen kann. Die Gießform stellt vorzugsweise eine Negativform der makroskopischen Welligkeit und mikroskopischen Rauigkeit dar, um diese exakt auf die jeweils gegossene Kunststofffliese zu übertragen. Die Gießform ist vorzugsweise mehrfach verwendbar, um nach Entnahme einer ausgehärteten Fliese durch erneutes Befüllen eine weitere Fliese darin fertigen zu können. Die Aushärtung des Materials erfolgt vorzugsweise durch eine chemische Vernetzungsreaktion wie eine Polymerisation, Polykondensation oder Polyaddition. Bezüglich der geometrischen Kennwerte der makroskopischen Welligkeit und der mikroskopischen Rauigkeit wird auf die vorstehenden Erläuterungen in Bezug auf das erfindungsgemäße Fliesenelement Bezug genommen. Insbesondere kann das erfindungsgemäße Verfahren fortgebildet werden, in dem nach dem Entnehmen des Fliesenelements aus der Gießform die Schritte durchgeführt werden:
a) Transportieren mehrerer Fliesenelements an den Verlegeort und
b) Verkleben einer unteren Verklebungsfläche der Fliesenelemente mit einem Untergrund mittels eines visco-elastischen Klebematerials.

Durch die Verklebung des Fliesenelementes mit dem Untergrund mittels eines viskoelastischen Klebematerials wird in vorteilhafter Weise eine besonders wirksame Trittschalldämpfung und Trittschallentwicklung erzielt, was insbesondere auf den auf Schiffen üblichen Stahlböden besonders vorteilhaft ist.

Noch weiter ist es bevorzugt, das erfindungsgemäße Verfahren fortzubilden durch Verfugen einer Kante der Fliesenelemente gegen ein Edelstahlfundament oder ein Edelstahlprofil mittels eines Kunstharzmaterials, vorzugsweise eines ungefüllten Kunstharzmaterials. Durch das Verfugen der Kante der Fliesenelemente gegen ein Edelstahlfundament wird eine dauerhafte und sichere Abdichtung des gesamten Bodenbelags gegen Randbereiche bzw. Einfassungen oder dergleichen erreicht, die den hohen Korrosionsbeständigkeitsanforderungen und dem hohen Reinigungsbedarf auf Schiffen entsprechen. Durch Verwendung eines Kunstharzmaterials für diese Verfugung wird einerseits eine grundsätzliche Elastizität bereitgestellt, die auch bei Vibrationen des Schiffskörpers, beispielsweise durch antriebsbedingte Einflüsse, keine Langzeitschäden wie Risse oder dergleichen entwickelt. Zugleich wird eine einfach zu verarbeitendes Material für die Verfugung bereitgestellt, das ohne aufwendige Arbeitssicherheitsauflagen verarbeitet werden kann.

Schließlich ist es noch weiter bevorzugt, das Verfahren fortzubilden durch Stoßbündiges Aneinanderlegen der Fliesenelemente ohne separate Fugenfüllung zwischen zwei benachbarten Fliesenelementen. Durch ein solches stoßbündiges Aneinanderlegen der Fliesenelemente wird eine Abdichtung zwischen den Fliesenelementen durch das Verklebungsmaterial der Unterflächen der Fliesenelemente selbst erzeugt und der Arbeitsgang der Verfugung zwischen benachbarten Fliesenelementen kann entfallen wodurch einerseits eine sichere Abdichtung, andererseits eine schnelle Verlegung erreicht wird.

Mit der Erfindung wird eine Fliese für den Einsatz in technischen Nassbereichen auf Schiffen bereitgestellt, die im Vergleich zu bekannten keramischen Fliesen für solche Bereiche ein wesentlich geringeres Gewicht aufweist und eine schnellere Verlegung ermöglicht. Die Rutschfestigkeit und der Verdrängungsfaktor sind gleichwertig oder besser zu den Kennwerten einer keramischen Fliese. Das Material ist insgesamt kostengünstiger, was insbesondere durch Füllstoffe, welche die Rutschfestigkeit weiter erhöhen können, erreicht werden kann. Die Anzahl der Fugen wird aufgrund der möglichen größeren Abmessungen der Fliesen erheblich reduziert. Die Entwicklung und Durchleitung von Trittschall kann durch die Fliese selbst reduziert werden, insbesondere auch durch die mögliche Verklebung der Fliese mit einem visko-elastischen Material. Es wird eine verbesserte Haftung der Kanten der Fliesen an Edelstahlfundamenten erreicht, da hier kein Fugenmörtel, sondern ungefülltes Kunstharzmaterial eingesetzt werden kann, wodurch auch bei längerem Gebrauch eine Rissbildung oder sogar Abrisse an dem Edelstahlfundament verhindert werden können. Die erfindungsgemäß bereitgestellten Fliesen sind sowohl beim Transport als auch bei der Verlegung und im späteren Gebrauch weitaus weniger empfindlich gegen Bruch, da sie eine grundsätzliche Flexibilität aufweisen.

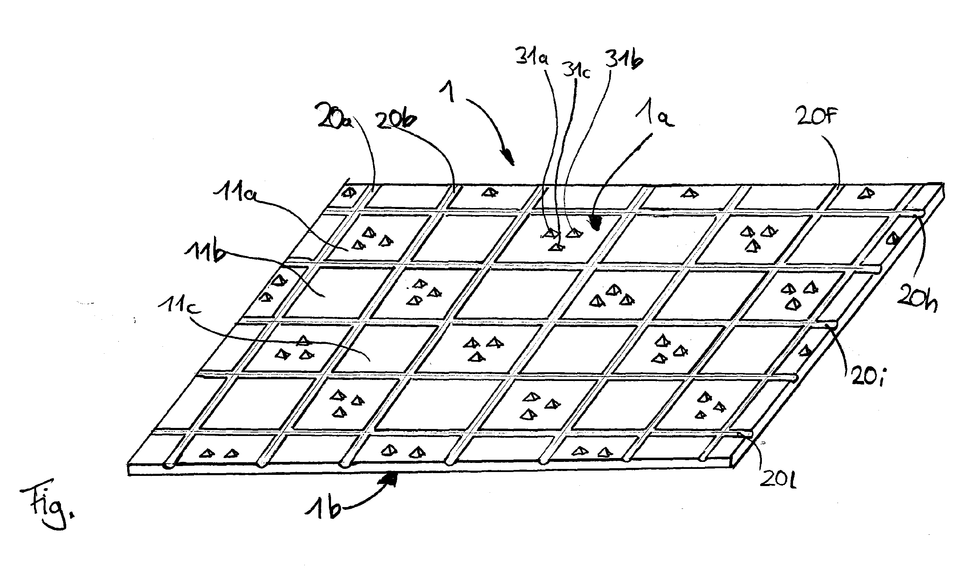

Ein Ausführungsbeispiel einer erfindungsgemäßen Fliese wird anhand der beiliegenden Figur näher erläutert:
Die Figur zeigt ein Fliesenelement 1 in einer perspektivischen Ansicht. Das Fliesenelement weist eine rutschfeste Oberfläche 1a auf, die zum Kontakt mit den Sohlen von Benutzern, die sich darauf bewegen, ausgebildet ist. Gegenüberliegend zu dieser rutschfesten Oberfläche ist eine untere Verklebungsfläche 1b an der Fliese, die eben ist und eine für eine Verklebung vorteilhafte aufgeraute Oberfläche, beispielsweise eine von Nuten durchzogene Oberflächenprofil aufweisen kann. Die Fliese ist insgesamt rechteckig ausgeführt mit einer Kantenlänge von 1,5 x 1,0 m.

Die Oberfläche weist einerseits eine erste makroskopische Welligkeit auf, die in Gestalt mehrerer Drainagekanäle 20a-l ausgeführt ist. Diese Drainagekanäle führen Flüssigkeiten, die auf die Oberfläche 1a der Fliese gelangen wirksam ab und verhindern damit ein Ausrutschen der Benutzer auf Flüssigkeitsansammlungen. Die Drainagekanäle unterteilen das Fliesenelement in mehrere Flächenabschnitte 11a, b, c und bewirken ein optisches Erscheinungsbild des Fliesenelementes nach Art mehrerer verfugter Fliesen. Indem die Flächenabschnitte entlang der Randbereich eine halbierte Fläche und die Flächenabschnitte in den Eckbereichen des Fliesenelementes eine geviertelte Fläche aufweisen, kann durch fugenloses Aneinanderverlegen mehrerer Fliesenelemente ein Erscheinungsbild einer großen gefliesten Fläche erzielt werden. In alternativen Ausgestaltungen kann auch eine andere Randbereichsgestaltung gewählt werden, beispielsweise indem ein mittig entlang seiner Verlaufsrichtung geteilter Drainagekanal im Randbereich verläuft.

Weiterhin ist eine zweite makroskopische Welligkeit vorhanden, die in Gestalt mehrerer pyramidenförmiger Erhebungen 31a, b, c, ...auf den Flächenabschnitten 11 a, b, c... was zur Folge hat, dass die Fliese auf ihrer Grundfläche von 1,5 x1,0 m insgesamt etwa 50 Erhebungen aufweist, die sich gegenüber der Oberfläche 1a und den dazwischen liegenden Drainagekanälen 21a-l erhaben darstellen. Ein Benutzer der Fliese, der darauf aufsteht, steht im Wesentlichen auf diesen Erhebungen oder kann durch mechanische Verklammerung daran rutschfest stehen. Flüssigkeiten, die sich auf der Bodenfliese befinden, fließen im Wesentlichen in die Drainagekanäle und stören daher nicht den Kontakt zwischen der Sohle des Benutzers und der Bodenfliese. Die Erhebungen 31a,b,c,... können auf jedem oder auf nur einigen der Flächenabschnitte 11a,b,c... ausgebildet sein.

Überlagert zu dieser makroskopischen Welligkeit ist eine mikroskopische Rauigkeit, die eine mechanische Verklammerung zwischen der Sohle eines Benutzers und der rutschfesten Oberfläche bewirken kann, ebenso eine Verdrängung von Flüssigkeitsresten, die sich auf den Erhebungen befinden. Die mikroskopischen Rauigkeiten sind im Wesentlichen im Bereich der Oberfläche 1a und der Erhebungen 31a, b, c,...der Bodenfliese ausgeführt. Die Drainagekanäle 21a-l können ebenfalls die mikroskopische Rauhigkeit aufweisen, bevorzugt ist es jedoch, dass sie eine einfach zu reinigende Oberfläche aufweisen, beispielsweise eine im Wesentlichen glatte Oberfläche.

Die erfindungsgemäße Bodenfliese wird hergestellt, indem zwei unterschiedliche Ausgangsmaterialien zu einer Zwei-Komponenten-Mischung miteinander vermischt und danach in eine Form eingefüllt werden. Die beiden Materialien reagieren miteinander und härten hierdurch zu einem Kunststoff aus. Nach erfolgter Aushärtung kann die so hergestellte Fliese aus der Form entnommen werden und ohne weitere Nachbearbeitung verlegt werden. Zu diesem Zweck wird die Fliese aus einem Herstellungswerk an den Verlegeort transportiert, dort kann sie dann mittels eines visko-elastischen Klebstoffs mit einem Fundament, beispielsweise einem Stahlboden eines Schiffes, verklebt werden.

## Patentansprüche

1. Fliesenelement für den Einsatz in technischen Nassbereichen auf Schiffen, mit
- einer rutschfesten Oberfläche (1a) mit einer ersten makroskopischen Welligkeit (20a-l) und einer mikroskopischen Rauigkeit,
- einer eckigen Form zur gefugten oder fugenloser Verlegung mehrerer Fliesen in aneinanderstoßender Anordnung, und
- einer unteren Verklebungsfläche (1 b),
**dadurch gekennzeichnet, dass** das Fliesenelement aus Kunststoff besteht und aus zumindest zwei unterschiedlichen Ausgangsmaterialien in einer chemischen Vernetzungsreaktion hergestellt ist.

2. Fliesenelement nach Anspruch 1,
**gekennzeichnet durch** einen Anteil von mehr als 10 Gew.-% an quarzitischen Füllstoffen.

3. Fliesenelement nach Anspruch 1 oder 2,
**dadurch gekennzeichnet, dass** die erste makroskopische Welligkeit durch eine unterschiedliche Stärke des Fliesenelements mit einem Unterschied zwischen der kleinsten Stärke und der größten Stärke von > 0,2 Millimeter oder durch Drainagekanäle (20a-I) mit einer Tiefe von 0,2 bis 1,5mm und einer Breite von 2 bis 10mm, vorzugsweise 3 bis 5mm realisiert ist.

4. Fliesenelement nach einem der vorhergehenden Ansprüche,
**dadurch gekennzeichnet, dass** die erste makroskopische Welligkeit durch einen oder mehrere Drainagekanäle gebildet wird, welche einen gegenüber der rutschfesten Oberfläche des Fliesenelements vertieften Kanalgrund aufweisen.

5. Fliesenelement nach Anspruch 4,
**dadurch gekennzeichnet, dass** das Fliesenelement mehrere durch Drainagekanäle voneinander getrennte Oberflächenabschnitte umfasst und vorzugsweise diese Oberflächenabschnitte und Drainagekanäle nach Art von verfugten Fliesen zueinander angeordnet sind, wobei die Drainagekanäle die Fugen und die Oberflächenabschnitte die Fliesen nachbilden.

6. Fliesenelement nach einem der vorhergehenden Ansprüche,
**gekennzeichnet durch** eine zweite makroskopische Welligkeit (31a, b, c...), welche **durch** eine Vielzahl von Erhebungen auf der rutschfesten Oberfläche gebildet wird.

7. Fliesenelement nach einem der vorhergehenden Ansprüche,
**dadurch gekennzeichnet, dass** die zweite makroskopische Welligkeit durch eine Oberfläche des Fliesenelements mit
- Rp zwischen 0,2 und 1,5 Millimeter vorzugsweise
- Rp zwischen 0, 4und 0,8 Millimeter und insbesondere
- Rp zwischen 0,65 und 0,75Millimeter
über eine Messbezugsstrecke von 5cm realisiert ist.

8. Fliesenelement nach Anspruch 6 oder 7,
**dadurch gekennzeichnet, dass** die zweite makroskopische Welligkeit durch eine Rauigkeit der Oberfläche des Fliesenelements mit einer Anzahl von 2- 20 Erhebungen pro 10cm² gebildet wird, insbesondere mit einer Anzahl von 3-10 lokalen Rauhigkeitsspitzen über eine Messbezugsstrecke von 10cm gebildet wird.

9. Fliesenelement nach einem der vorhergehenden Ansprüche,
**dadurch gekennzeichnet, dass** die mikroskopische Rauigkeit durch eine Oberfläche des Fliesenelements mit
- Rp zwischen 0,02 und 0,40Millimeter, vorzugsweise
- Rp zwischen 0,04 und 0,15 Millimeter insbesondere
- Rp zwischen 0,05 und 0,055 Millimeter
über eine Messbezugsstrecke von 1cm realisiert ist.

10. Fliesenelement nach einem der vorhergehenden Ansprüche,
**dadurch gekennzeichnet, dass** die mikroskopische Rauigkeit durch eine Rauigkeit der Oberfläche des Fliesenelements mit einer Anzahl von 3-10 lokalen Rauhigkeitsspitzen über eine Messbezugsstrecke von 1cm gebildet wird.

11. Verfahren zur Herstellung eines rutschfesten Schiffsbodenbelags für technische Nassbereiche, mit den Schritten:
a) Bereitstellen einer Gießform mit einem Hohlraum oder einer Vertiefung, der/die eine Negativform für eine Oberfläche mit einer ersten makroskopischen Welligkeit in Gestalt eines oder mehrerer Drainagekanäle, eine zweite makroskopische Welligkeit in Gestalt einer Mehrzahl von Erhebungen über die Oberfläche und einer mikroskopischen Rauigkeit aufweist, welche vorzugsweise nach einem der Ansprüche 3-10 ausgebildet ist,
b) Mischen einer ersten Komponente mit einer hiervon verschiedenen zweiten Komponente zu einer flüssigen Zweikomponentenmischung,
c) Einfüllen der Zweikomponentenmischung in die Gießform,
d) Entnehmen eines Fliesenelementes aus der Gießform nach Reaktion und Aushärtung der Zweikomponentenmischung.

12. Verfahren nach Anspruch 11, mit den Schritten:
e) Transportieren mehrerer Fliesenelements an den Verlegeort und
f) Verkleben einer unteren Verklebungsfläche der Fliesenelemente mit einem Untergrund mittels eines visco-elastischen Klebematerials.

13. Verfahren nach Anspruch 11 oder 12, mit dem Schritt:
g) Verfugen einer Kante der Fliesenelemente gegen ein Edelstahlfundament oder ein Edelstahlprofil mittels eines Kunstharzmaterials, vorzugsweise eines ungefüllten Kunstharzmaterials.

14. Verfahren nach einem der Ansprüche 11 bis 13 mit den Schritten:
stoßbündiges Aneinanderlegen der Fliesenelemente ohne separate Fugenfüllung zwischen zwei benachbarten Fliesenelementen.
